Europäisches Patentamt

European Patent Office

Office européen des brevets

(11) Publication number: 0 573 679 A1

## EUROPEAN PATENT APPLICATION

(21) Application number: 92109217.7

(51) Int. Cl.⁵: G06F 15/68

(22) Date of filing: 01.06.92

(43) Date of publication of application:
15.12.93 Bulletin 93/50

(84) Designated Contracting States:
DE FR GB

(71) Applicant: EZEL INC.
New Koishikawa Bldg.
5-11-17, Koishikawa
Bunkyo-ku, Tokyo 112(JP)
Applicant: SHARP KABUSHIKI KAISHA
22-22 Nagaike-cho
Abeno-ku
Osaka 545(JP)

(72) Inventor: Yamaji, Akira c/o Sharp Corporation
22-22, Nagaike-cho, Abeno-ku
Osaka 545(JP)
Inventor: Ida, Shiro c/o Sharp Corporation
22-22, Nagaike-cho, Abeno-ku

Osaka 545(JP)
Inventor: Naito, Hiroyoshi c/o Sharp
Corporation
22-22, Nagaike-cho, Abeno-ku
Osaka 545(JP)
Inventor: Kawanaka, Seido c/o Sharp
Corporation
22-22, Nagaike-cho, Abeno-ku
Osaka 545(JP)
Inventor: Takemura, Hideo c/o Sharp
Corporation
22-22, Nagaike-cho. Abeno-ku
Osaka 545(JP)

(74) Representative: Patentanwälte Grünecker,
Kinkeldey, Stockmair & Partner
Maximilianstrasse 58
D-80538 München (DE)

(54) Threshold determination method.

(57) The present invention has the object to provide a threshold determination method for good binarization according to the density distribution of an image.

In this invention, the upper limit of the density range of the background is determined as the threshold by regarding the density distribution of the background to be the normal distribution and calculating the density range of the background after settling maximal number of pixels of density histogram to be the configuration density (not background density).

Fig. 1

## FIELD OF THE INVENTION

The present invention relates to a threshold determination method for binarizing, in order for a copy machine to recognize and construct an image, for example.

## BACKGROUND OF THE INVENTION

A conventional method for controlling density for a copy machine is shown in Fig. 4: i) determining a predetermine density D0, ii) extracting a density with pixels equal to or more than a predetermined number of pixels "N" in the density ranges darker than the predetermined density in i) and lighter than it, iii) calculating the minimal value D1 and the maximal value D2, iv) determining a copy density "A" of the copy machine by correcting the predetermined density D0 according to D1 and D2 in iii).

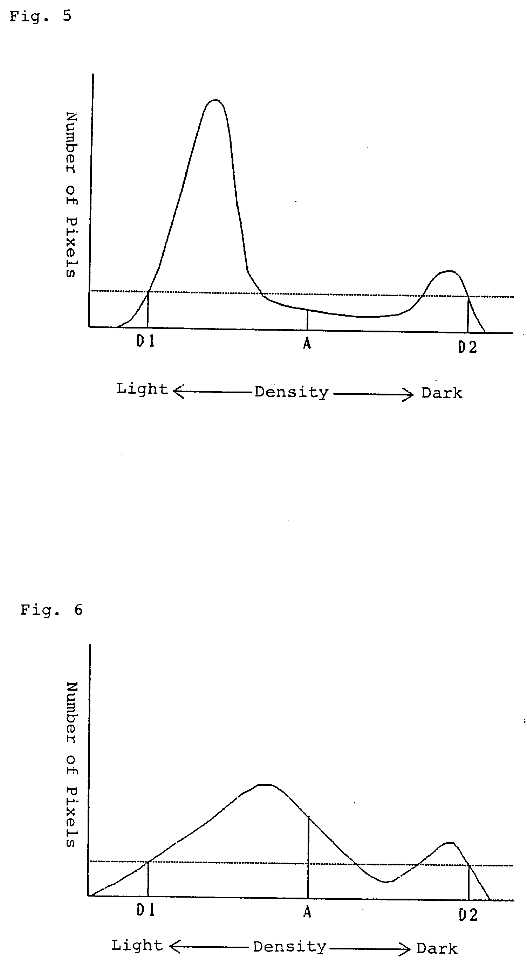

The characteristic of a histogram may be different from each original sheet to be copied as shown in Figs. 5 and 6. The histogram in Fig. 5 is an example easy to part the area of background and information such as a character. When density "A" determined according to density D0, D1 and D2 is threshold, the background is reduced completely and the image is binarized clearly. As clearly shown in Fig. 5, each area of information and background has an independent peak on the histogram. The information area has darker density than the background area.

On the other hand, Fig. 6 shows the histogram of an image whose background histogram distributes because of its colors and patterns. When it is binarized taking for the threshold density "A", pixels in the background remain as noise. This is an example produced a poorer image than the original sheet to be copied by binarization.

## SUMMARY OF THE INVENTION

The present invention is invented to solve such a conventional problem and has an object to provide a threshold deciding method possible to binarize clearly corresponding to the density distribution of an image.

The threshold deciding method according to the present invention has the characteristics that the upper limit of the density range of the background is determined as the threshold by regarding the density distribution of the background to be the normal distribution and calculating the density range of the background after settling maximal number of pixels of density histogram to be the configuration density (not background density). As the information area is parted clearly by binarizing with the threshold determined in this way, the poor image caused by a copy machine can be prevented.

## BRIEF DESCRIPTION OF THE DRAWINGS

Fig. 1 shows a block diagram of a copy machine according to the present invention.

Fig. 2 shows an embodiment in which the dynamic range is enough to indicate all of the density of the background.

Fig. 3 shows an embodiment in which a part of the density of the background is lost because of the insufficiency of dynamic range.

Fig. 4 shows a histogram for explaining the conventional method to control density.

Fig. 5 shows a histogram of a sheet to be copied whose information area and background area can be easily divided.

Fig. 6 shows a histogram of a sheet to be copied whose distribution of the background spreads because of the colors of the background and so forth.

## PREFERRED EMBODIMENT OF THE PRESENT INVENTION

Hereinafter, an embodiment of the threshold determined method according to the present invention is described with reference to the attached drawings.

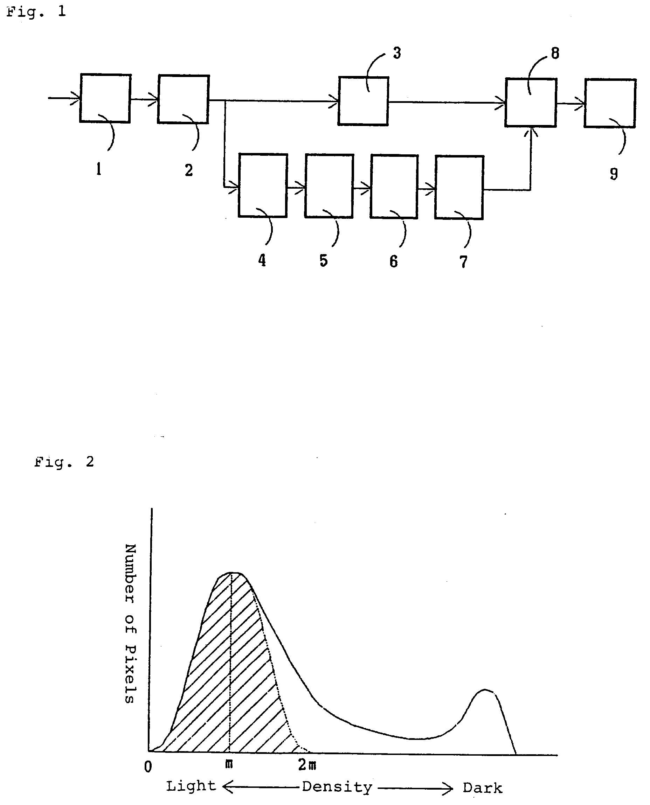

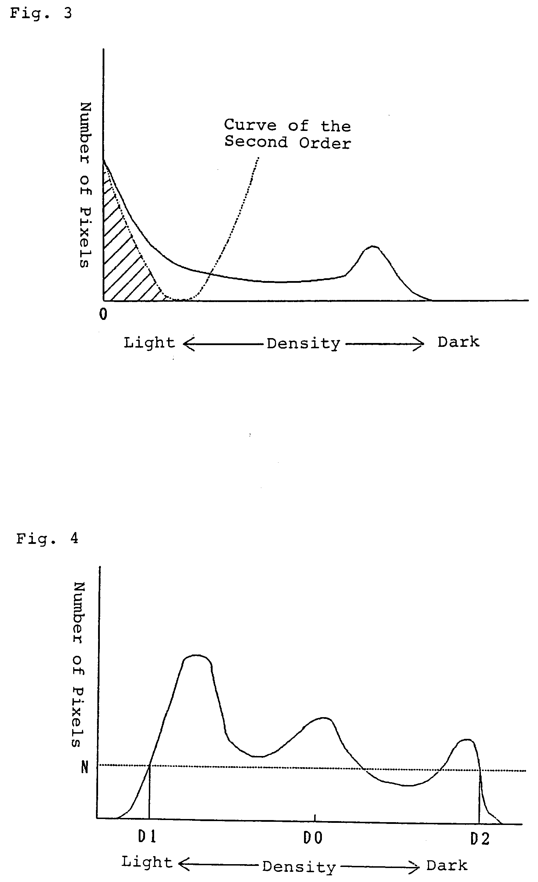

Figs. 2 and 3 show the examples of density histogram of a copy machine. Especially, Fig. 2 shows the case with enough dynamic range and Fig. 3 shows the case in which a part of the density of the background density is lost because of, for example, insufficiency of dynamic range.

In Fig. 2, both of the background part and information part have peaks with nearly the same normalized distribution. The peak of the background part is larger than that of the information part. The part with lighter density more correctly reflects the density distribution of only background than the density "m" of the peak of the background.

Actually, the darker side than "m" overlaps with the distribution of the information part in general. Considering it, the symmetry distribution is generated by reversing the distribution area of lighter density than "m" taking "m" as the center for reverse (shown with slanted lines).

Regarding the predetermined area as the background, the maximum value is to be the threshold. Here, the area to be regarded as the background is generally evaluated by the standard deviation $\sigma$.

It is well known that the area $\pm 1\sigma$, $\pm 2\sigma$ and $\pm 3\sigma$ (They are called $1\sigma$ grade, $2\sigma$ grade and $3\sigma$ grade.) occupy 68.3%, 95.5% and 97.7%, respectively, of the whole of normalized distribution. Considering the density range error of the background presumed from the histogram, the area to be regarded as the background is determined.

When the light density area of the background density cannot be inputted as in Fig. 3, it is necessary to presume the background density within the darker density area than the density of the peak ("0", here). Therefore, the curve approximate to the density distribution of the background is obtained by referring the points on the histogram.

The approximate curve line can be expressed by quadratic curve or the formula of

$$f(x) = \exp\{-(x-m)^2/2\sigma^2\}/\sigma\sqrt{2}$$

where,

"f(x)" shows the density function of a probability variable x;

"x" shows the available value of probability variable x;

"m" shows the mean value of probability variable x;

"$\sigma$" shows the standard deviation of probability variable x.

In Fig. 3, the broken line shows the curve approximate to the quadratic curve.

Fig. 1 shows the block diagram of the system of a copy machine using the present invention.

Circuit 4 calculates the brightness of each pixel of the image inputted to be copied, and calculates how many pixels with the same brightness exist in the image. This circuit can calculates the histogram of the image.

Generally, the histogram has two peaks; in the information area and the background area. As the density of the background area is lighter than that of the information area, the calculation is performed regarding the peak in the minimal density area to be the maximal value of the background. Such a calculation is performed in circuit 5.

Circuit 6 calculates the standard deviation of the normal distribution assuming the normal distribution from the calculated maximal value. The standard deviation is calculated by i) calculating the mean number of the pixels of each density in the normal distribution, ii) calculating the total of squared difference between the number of pixels of each density and the mean number of pixels, iii) dividing the total value in ii) by the number of pixels in the normal distribution, and iv) calculating the square root of the value calculated in iii). The distribution of the pixels in the background can be clear by the standard deviation. Threshold circuit 7 calculates the threshold for binarization, which outputs the determined threshold. The threshold is determined according to 1$\sigma$ grade, 2$\sigma$ grade or 3$\sigma$ grade from the calculated standard deviation, considering the error within the background density.

"1" shows the reading means for a sheet to be copied: such as CCD camera can be used, for example. "2" shows an A/D converter to convert an analogue signal inputted from camera and so forth. "3" shows a memory to memorize the gray-level of the original image before processing. "8" shows a binary circuit to convert the area with lighter density than the threshold outputted from "7" into white color. Regarding the area converted into white color as the background area, the next processing is performed. The processing in "3" and that in "4" to "7" are performed in parallel. Binary circuit 8 begins binarization of the image in memory 3 just after the threshold is outputted from threshold circuit 7. "9" is a circuit to memorize the binarized image converted in "8".

When a plural number of peaks exist and one of it is in the area with the density lighter than that of the highest peak, it is obstructive to decide the threshold because the information area and the background area are not divided properly. In such a case, the maximum calculation circuit 5 outputs the signal for indicating error in the indication means which is not shown in Fig. 1.

As mentioned above, the present invention makes it possible to prevent the poor image with respect to a copy machine, for example, because the information area is divided properly.

## Claims

1. A threshold determination method comprising steps of i) generating a density histogram of an image, ii) regarding a value on a peak of density histogram to be a value on a peak of background pixels and regarding density distribution of background pixels to be a normal distribution, iii) clarifying areas of background pixel and configuration pixel, and iv) recognizing a border between background pixel area and configuration pixel area clarified in iii) to be a threshold.

Fig. 1

Fig. 2

Fig. 3

Number of Pixels

Curve of the
Second Order

0

Light ⟵ ——— Density ——— ⟶ Dark

Fig. 4

Number of Pixels

N

D1        D0        D2

Light ⟵ ——— Density ——— ⟶ Dark

Fig. 5

Number of Pixels

D 1          A          D 2

Light ←——————Density——————→ Dark

Fig. 6

Number of Pixels

D 1          A          D 2

Light ←——————Density——————→ Dark

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 12, no. 295 (P-743)(3142) 11 August 1988 & JP-A-63 067 684 ( HITACHI LTD. ) 26 March 1988 * abstract * | 1 | G06F15/68 |
| X | PATENT ABSTRACTS OF JAPAN vol. 13, no. 309 (P-898)(3657) 14 July 1989 & JP-A-10 82 270 ( OMRON TATEISI ELECTRONICS CO. ) 23 March 1989 * abstract * | 1 | |
| A | EP-A-0 187 911 (IBM) * abstract; figure 1 * | 1 | |

TECHNICAL FIELDS SEARCHED (Int. Cl.5)

G06F

The present search report has been drawn up for all claims

| Place of search | Date of completion of the search | Examiner |
|---|---|---|
| THE HAGUE | 02 FEBRUARY 1993 | GONZALEZ ORDONEZ O. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)